(19) Europäisches Patentamt
European Patent Office
Office européen des brevets

(11) **EP 3 435 731 A1**

(12) **EUROPEAN PATENT APPLICATION**

(43) Date of publication:
**30.01.2019  Bulletin 2019/05**

(51) Int Cl.:
*H04W 88/04* (2009.01)     *H04W 88/08* (2009.01)
*H04W 84/00* (2009.01)

(21) Application number: **17183838.6**

(22) Date of filing: **28.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy 02610 Espoo (FI)**

(72) Inventors:
• **Perenda, Erma**
  **2018 Antwerpen (BE)**
• **Atawia, Ramy**
  **2018 Antwerpen (BE)**
• **Gacanin, Haris**
  **2018 Antwerpen (BE)**

(74) Representative: **IP HILLS NV**
**Hubert Frère-Orbanlaan 329**
**9000 Gent (BE)**

(54) **A SYSTEM FOR OPTIMIZING QUALITY OF EXPERIENCE OF A USER DEVICE OF A MULTI-RADIO MULTI-CHANNEL WIRELESS NETWORK**

(57)     A system (1) for optimizing Quality of Experience of a user device (2) of a multi-radio multi-channel wireless network comprising a wireless access point (3) and extenders (4), comprising:
- a selecting unit (10) mapping said extenders (4) and selecting one of said extenders (5) coupled via a used fronthaul channel (502) to said user device (2);
- a performance determining unit (20) collecting network parameters (200) for plural channels of said extenders (4); and
- a performance optimizing unit (30) evaluating from said network parameters (200) updated positions (50) and updated channel combinations (51) for said extender (5), and generating an updated position (52) and/or an updated channel combination (53) for said extender (5) when one or more network parameters (200) for said extender (5) overstep one or more predefined thresholds.

Fig. 3

**Description**

**Technical Field**

The present invention relates to the optimization of the Quality of Experience in a semi-stationary multi-radio multi-channel wireless mesh network.

**Background**

Wi-Fi networks nowadays is a crucial part of our everyday life and customers of the Wi-Fi networks expect reliable and uniform service quality. Contemporary indoor Wi-Fi networks comprise multiple connectivity nodes such as for example access points, extenders, etc., and they are challenged to enable the following: self-configuration and self-optimization without the need of a human intervention, and delivering a consistently high customer experience, also referred to as QoE standing for Quality of Experience.

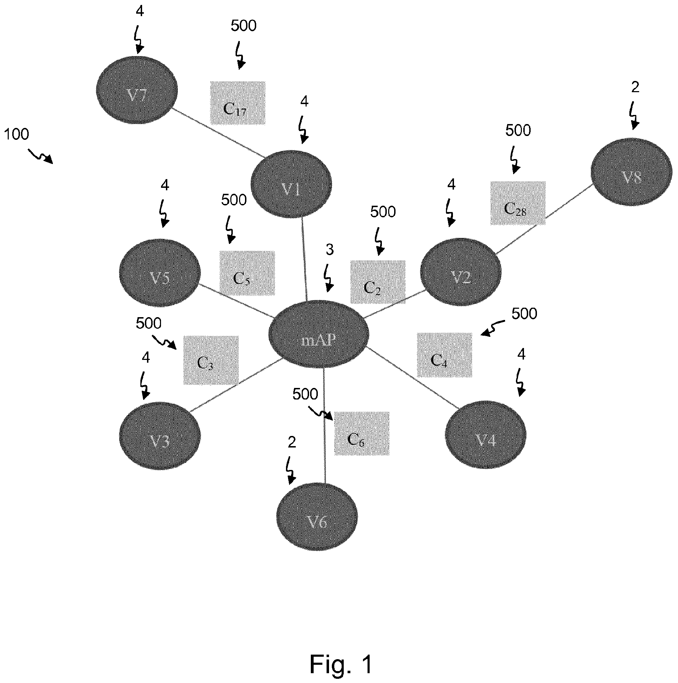

Today's indoor Wi-Fi networks deployments comprise of multiple access points configured in a star and/or a mesh network. To avoid a degradation of the throughput of the customers due to the multi-hop architecture, access points and extenders are equipped with multiple radios to enable simultaneous data transmission and reception. Two challenges need to be tackled for each of these extenders: channel optimization and deployment optimization. Fig. 1 summarizes the different approaches for channel and position assignments.

A plethora of channel assignment techniques in multi-radio multi-hop Wi-Fi networks was introduced in the literature and reviewed in the scientific publication of A.B. M. Alim Al Islam et al. entitled "Channel Assignment Techniques for Multi-Radio Wireless Mesh Networks: A Survey" published in IEEE Communications Surveys and Tutorials 18(2) 988-1017 in December 2015. First, with regards to the point of decision, techniques can be classified in two categories: centralized and distributed. Second, assignment strategy can be classified into static, quasi-static, semi-dynamic and dynamic according to the environment changes. The third aspect considers the minimum physical and logical entity to which channels may be assigned, and link-based, flow-based and group-based techniques have been developed. The fourth classification is based on spanning layers in OSI channel assignment techniques which can be either single-layer or cross-layer. Finally, regarding the underlying methods in their operations, channel assignment techniques are classified into graph-based, optimization-based, artificial intelligence-based, peer-oriented and other heuristic techniques. In principle, channel assignment in mesh deployments may combine one or more of the above approaches.

The existing channel optimization solutions above overlook the following practical features that hinder their application in future networks. First, they assumed fixed topology in which the positions of the extenders are fixed. However, networks comprise extenders that are repositioned by the customers based on the environment and the resultant network performance. Another challenge is the dynamics in the neighbouring traffic, channels and positions that are not captured while evaluating the channels at both the access point and the extenders. Single links are typically independently optimized and a possible dependency between the links of the same path between a master access point and a user equipment or sharing a common node is ignored.

Access point deployment strategies can be summarized as follows. First, one can rely on onsite survey. An experienced technician or engineer performs walk or speed test to test several candidate positions by iteratively placing a transmitter, i.e. a temporary access point, and measure the corresponding coverage or throughput at these candidate positions. The optimal position and channel configuration is selected from these candidate positions. However, such approach increases the burden of placing and configuring the channels of access points and extenders. In addition, it is only optimal for the conditions at which the speed or walk test were performed. Thus, suboptimal performance is typically observed when the neighbouring environment changes. Alternatively, one can rely on planning software. A floor plan, propagation model and throughput estimations are integrated by a software which tries more deployment setups, i.e. more access point positions, and thus burden less compared to the online survey technique. However, the dynamics of the neighbouring environment are still overlooked, in addition to modelling the floor plan. Alternatively, one can rely on the guided user-based technique. The technical knowledge and expertise are transferred to the user and the technique relies on the user to optimize the network based on guidelines. However, autonomous operation is required to monitor the optimality of the setup and to provide a minimum number of recommendations to the user.

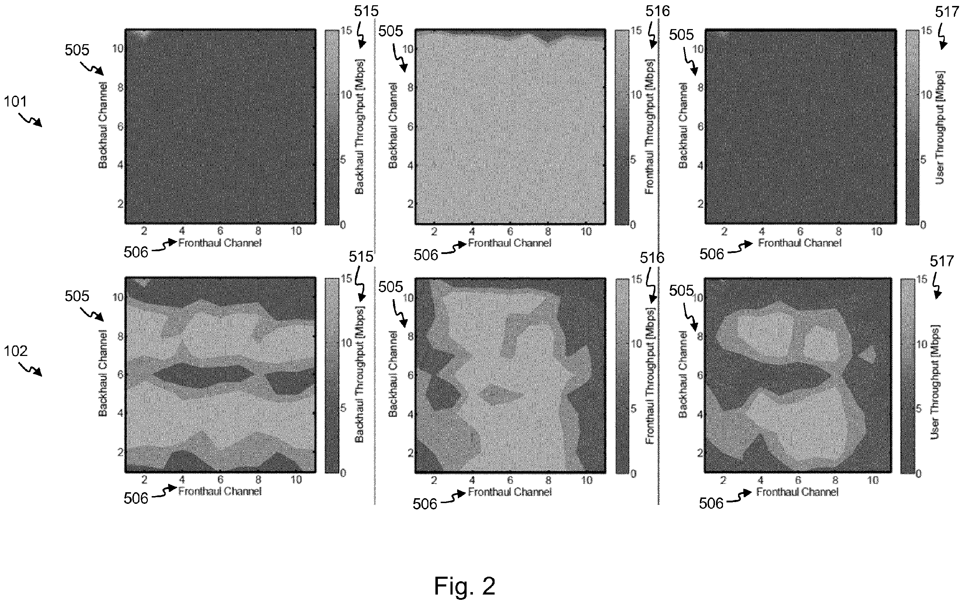

Position optimization is still manual and/or requires the end user or technician's involvement and subjected to their prior knowledge. To illustrate the limitations of the strategy of the current techniques of optimization of the channel and of the position of an extender in a multi-radio multi-channel wireless mesh network, we consider a network comprising a master access point, a single or a plurality of extenders, and a user equipment. The link between the master access point and the extender is defined as the backhaul link and the link between the extender and the user equipment is defined as the fronthaul link. Fig. 2 represents the backhaul throughput, the fronthaul throughput and the user throughput. The extender presents a mid-way approach. A very good fronthaul throughput is measured on different channel combinations for the extender at the same position, while the backhaul throughput is very low on any combination of channels for the extender. Consequently, the user throughput being the minimum of the backhaul throughput and the fronthaul throughput, the user throughput is not enough.

## Summary of the Invention

It is an objective to disclose a system and the related method that overcome the above identified shortcomings of existing solutions. More particularly, it is an objective to disclose a system which autonomously searches and selects both optimal channel combination and optimal position jointly for an access point and an extender without the need of human domain knowledge or intervention.

According to a first aspect of the present invention, the above defined objectives are realized by a system for optimizing Quality of Experience of a user device of a multi-radio multi-channel wireless network comprising a wireless access point and one or more extenders, the system comprising:

- a selecting unit, adapted to map the extenders and to select one of the extenders comprising a used channel combination and coupled via a used backhaul channel to the wireless access point and coupled via a used fronthaul channel to the user device;
- a performance determining unit, adapted to collect network parameters for plural channels of the extenders; and
- a performance optimizing unit, configured to evaluate from the network parameters updated positions and updated channel combinations for the one of the extender, and further configured to generate an updated position and/or to generate an updated channel combination for the extender when one or more network parameters for the extender overstep one or more predefined thresholds.

The present invention addresses the channel selections for an access point and an extender of a multi-radio multi-channel wireless network while considering placement constraints. The end-to-end user performance is determined by optimizing both the positions and the channel configurations of all the extenders connecting the user equipment to the access point, based on collected user and channel information. This allows to autonomously search and select both optimal channel, jointly for the access point and the extender, and the position of the extender without the need of human domain knowledge or human intervention.

The network model presents a semi-stationary multi-radio multi-channel wireless mesh network, also referred to as MR-MC wireless mesh network that comprises one static master access point, also referred to as access point, or mAP or AP, and a plurality of access points with wireless backhaul referred to as extenders. The position of the master access point is static. In other words, the position of the access point does not change over time. The positions of the extenders can be changed over time. Each extender comprises one or more backhaul channels and one or more fronthaul channels. A used channel combination of an extender comprises one of the backhaul channels, referred to as the used backhaul channel, and one of the fronthaul channels, referred to as the used fronthaul channel, wherein both the used backhaul channel and the user fronthaul channel are in use by the extender. There exist $N$ available channels and $L$ positions to be selected in the network. The master access point and each of the extenders are equipped with $R$ radio interfaces, where each radio is assigned to one channel. The network is serving $U$ user devices that are connected to the master access point either directly or through the extender. The network is modelled as a bi-directional graph $G(V,E)$ wherein $V$ is the set of nodes and $E$ is the set of uni-directional links. Each node $v_i$ comprised in $V$ represents either the master access point, the extender or the user device, where $v_0$ is the master access point, $v_1, ..., v_M$ are extenders, and $v_{M+1}, ...., v_{M+U}$ are user devices. The set of radio interfaces for each node $v_i$ comprised in $V$ is denoted by $R_{v_i}$. Let's denote with $C_{v_i}$ the set of channels selected to radio-interfaces of nodes $v_i$. Each link $e_{ij}$ comprised in $E$ comprises of two nodes $v_i$ comprised in $V$ and $v_j$ comprised in $V$, where $v_j$ is connected to $v_i$ and the latter provides the next hop to the master access point. Each two nodes connected to each other must have at least one common channel assigned to any of their interfaces in common such that $C_{v_i} \cap C_{v_j} \neq \emptyset$. Let's denote with $h_{ij}$ the channel used for the link $e_{ij}$. The link can be represented with a tuple $e_{ij} = \{v_i, v_j, h_{ij}\}$. For any extender node $v_i \in V$, $i = [1; M]$ we define a set of managed and non-managed neighbours $N_{v_i}$ sensed by the extender node $v_i$.

The system according to the present invention first identifies the extenders, also referred to as nodes, which form a path between the access point and the user device. This can be done by checking the associated devices list of each extender and traceback all the nodes until the user device is reached. The following TR 181 counters can be used:

$$\text{Device.WiFi.AccessPoint.}\{i\}.\text{AssociatedDeviceNumberOfEntries} \qquad (1)$$

$$\text{Device.WiFi.AccessPoint.}\{i\}.\text{AssociatedDevice.}\{i\}.\text{MACAddress} \qquad (2)$$

We define the k$^{th}$ user path, $p_k$ = {$e_{i,j}$| $i,j$ ∈ {0, ..., M}, $i \neq j$} as a set of distinct links $e_{i,j}$ ∈ E connecting the access point ($v_0$) and the k$^{th}$ user device $v_k$, wherein k ∈ [M + 1 ,M + U] denotes user device. We condition the two successive links $e_{i,j}$ and $e_{n,m}$ in the path $p_k$ with n = m. In the set of extenders which form the links of path $p_k$ must be only one node with index equal to 0 and only one node with index k that is bigger than M+1, since there can be more nodes with indexes in range [1,M].

The performance optimizing unit according to the present invention considers candidate updated positions for the extender and candidate updated channel combinations for the extender using the network parameters collected by the performance determining unit for plural channels of the extenders. In other words, the performance optimizing unit identifies candidate positions and candidate combinations of updated fronthaul channels and updated backhaul channels from the network parameters and for which the performance optimizing unit determines from the network parameters that the Quality Of Experience of the user device at the candidate positions and for the candidate combinations would be larger than the Quality Of Experience of the user at the current position of the extender and for the current channel combination for the extender. In other words, the performance optimizing unit evaluates the Quality Of Experience of the user device for all the possible updated channel combinations of used fronthaul channels and used backhaul channels at all the possible updated positions of the extender. The performance optimizing unit further generates an updated position and/or an updated channel combination for the extender when one or more network parameters for the extender overstep one or more predefined thresholds.

According to an optional aspect of the invention, the system further comprises a controlling unit, adapted to determine whether the Quality of Experience of the user device at the updated position and/or for the updated channel combination exceeds a predefined Quality of Experience threshold.

This way, the updated position and/or the updated channel combination can be selected such that the end-to-end throughput of the user device is above a minimal value which can satisfy the user or the maximum number of allowed interruptions in the network exceed a predefined number. If the updated channel combination did not improve the network performance and a user of the user device remains unsatisfied, e.g. when the queue at the access point for this user device remains full for a long duration, then the position of the extender must be changed to an updated position. A maximum number of updated positions of the extender can be tried for a certain extender to minimize the burden of the user of the user device. If both action did not improve the Quality Of Experience of the user device, then the position of the next extender in the path has to be selected as an updated position.

According to an optional aspect of the invention, the selecting unit is further adapted to:

- calculate throughputs of plural links between the wireless access point and the user device from a total number of transmitted bytes over a total number of received bytes over a time interval; and
- select the link for which the end-to-end throughput is the lowest, thereby selecting the extender.

The end-to-end throughput between the access point and the user device is defined by the following objective function:

$$\max_{C,L} \sum_{k=M+1}^{M+U} T_k \qquad (3)$$

where we search for a set of channels $C = \{C_{v_i} | v_i \in V, i = [0, M]\}$ and a set of positions $L = \{l_i | i = [1, M]\}$ that lead to optimal network configuration for each path $p_k$, k =[M +1,M +U], where $T_k$ is the end-to-end throughput of the user device k and is equal to:

$$T_k = min\left\{T_{e_{ij}} | e_{ij} \in p_k\right\} \qquad (4)$$

where $T_{e_{ij}}$ denotes the throughput of $e_{ij}$ belonging to the path $p_k$.

The throughput of one link $e_{ij}$ = {$v_i$, $v_j$, $h_{ij}$} is given as:

$$T_{e_{ij}} = f\{u_{h_{ij}}^{(l_j)}, SINR_{v_j}^{(l_j)}\} \qquad (5)$$

where $u_{h_{ij}}^{(l_j)}$ and $SINR_{v_j}^{(l_j)}$, respectively, denote the utilization of channel $h_{ij}$ and signal-to-interference plus noise ratio of $e_{ij}$ at receiver node $v_j$ placed at the position $l_j \in L$.

The selecting unit then selects the extender $j^*$ that is impacting the end-to-end throughput and calculated as:

$$j^* = argmin(T_{e_{ij}}) \text{ for all } e_{ij}. \qquad (6)$$

The throughput is calculated using the total number of transmitted and received bytes over a time interval. The following TR 181 counters can be used:

$$\text{Device.WiFi.AccessPoint.\{i\}. AssociatedDevice.\{i\}.Stats.BytesReceived} \qquad (7)$$

$$\text{Device.WiFi.AccessPoint.\{i\}. AssociatedDevice.\{i\}.Stats.BytesSent} \qquad (8)$$

According to an optional aspect of the invention, the performance determining unit is further adapted to calculate from the network parameters:

- a RSSI ratio of a backhaul Received Signal Strength Indicator at backhaul of the extender and a fronthaul Received Signal Strength Indicator at fronthaul of the extender;
- updated Received Signal Strength Indicators for the updated channel combinations comprising ratios of backhaul Received Signal Strength Indicators at backhaul of the extenders and fronthaul Received Signal Strength Indicators at fronthaul of the extenders;
- a channel utilization ratio of a backhaul channel utilization factor over a fronthaul channel utilization factor for the used channel combination;
- updated channel utilization ratios for the updated channel combinations comprising ratios of backhaul channel utilization factors over fronthaul channel utilization factors for the updated channel combinations;
- a Signal to Interference plus Noise Ratio using the updated Received Signal Strength Indicators; and
- a bandwidth of the used channel combination.

The Signal-to-Interference-plus-Noise Ratio, also referred to as SINR level, at the node $v_j$ comprised in $V$ at the position $k$ is equal to:

$$SINR_{v_j}^{(l_j)} = \frac{P_{v_j}^{(l_j)}}{\sum_{v_k \in \mathcal{N}_{v_j}} \sum_{r \in C_{v_k}} w_{v_i, v_{k,r}} P_{v_{k;r}}{}^{(l_j)} + \eta_{v_j}^{(l_j)}} \qquad (9)$$

where $P_{v_j}^{(l_j)}$ is the power received at the extender node $v_j$ from its link peer $v_i$, where $N_{v_j}$ is the set of neighbour extender nodes of the extender node $v_j$, where $P_{v_{k;r}}{}^{(l_j)}$ is the power received at the position $l_j$ of the extender node $v_j$ from the radio of the node $v_k \in N_{v_j}$ which is tuned on the channel $h_r \in C_{v_k}$, where $\eta_{v_j}^{(l_j)}$ is the external noise at the position $l_j$ and where $w_{v_i, v_{k,r}}$ is the interference level factor between the radios of the nodes $v_j$ and $v_k$ and is defined for the 2.4GHz band as follows:

$$w_{v_j, v_{k,h}} = \begin{cases} 1 - |h_{ij} - h_r| \times c & if \; |h_{ij} - h_r| \leq 5 \\ 0 & otherwise \end{cases} \qquad (10)$$

where $h_{ij}$ is the channel assigned to the radio used for the link $e_{ij}$, where $h_r$ is the channel assigned to the radio $r$ of the

node $v_k$, and where $c$ is the non-overlapping portion of the two adjacent channels, expressed as a fraction of the frequency spectrum of a channel and is equal to 1/5 approximately.

The channel utilization $u_{h_{ij}}^{(l_j)}$ for channel $h_{ij}$ at the position $l_j \in L$ is defined as the percentage of time, linearly scaled with 255 representing 100% that the access point sensed the medium was busy, as indicated by either the physical or virtual carrier sense mechanism, also referred to as the CS mechanism. This percentage is computed using the following formula:

$$u_{h_{ij}}^{(l_j)} \tag{11}$$

$$= \left\lfloor \frac{channel\ busy\ time}{dot11ChannelUtilizationBeaconIntervals \times dot11BeaconPeriod \times 1024} \right.$$

$$\left. \times 255 \right\rfloor$$

where the *channel busy time* is defined as the total microseconds during which the CS mechanism observed the channel busy between predefined beacon intervals Dot11ChannelUtilizationBeaconIntervals. The optimization of objective function of equation (3) is subjected to the following set of constraints:

- Channel availability - the set of channels that can be assigned to any node is limited to $N$;
- Channel-radio relationship -- each radio can be assigned only one channel. That is $\forall v_i \in V,\ card\ (C_i) = card\ (R_{v_i})$ where, $card(\cdot)$ denotes the cardinality of a set;
- Radio constraints -the number of channels assigned to one node cannot exceed the number of radios on the node. That is $\forall v_i \in V,\ \overline{C_i} \leq \overline{R_{v_i}}$ where $\overline{\cdot}$ denotes the number of distinct elements in a set, what means that the same channel can be assigned to different radios of $v_i$;
- Connectivity Constraints - to ensure connectivity, each two adjacent nodes $v_i$ and $v_j$ must have at least one channel in common $C_{v_i} \cap C_{v_j} \neq \emptyset$.

This way, the values of Received Signal Strength Indicators, also referred to as RSSI, at both backhaul and fronthaul of the extender, and the neighbour scan collected using RE 181 counters, are defined and retrieved as follows:

$$\begin{matrix} RSSI_b \\ \overline{RSSI_f} \end{matrix} \qquad \begin{matrix} \text{Device.WiFi.AccessPoint.\{i\}.} \\ \text{AssociatedDevice.\{i\}.SignalStrength} \end{matrix} \qquad (12)$$

$$Neighbour\ Cha \qquad \text{Device.WiFi.NeighbouringWiFiDiagnostic.Result.\{i\}.Channel} \qquad (13)$$

$$Neighbour\ Rad \qquad \text{Device.WiFi.NeighbouringWiFiDiagnostic.Result.\{i\}.Radio} \qquad (14)$$

$$Neighbour\ RSSI \qquad \text{Device.WiFi.NeighbouringWiFiDiagnostic.Result.\{i\}.RSSI} \qquad (15)$$

$$\frac{U_b}{U_f}$$ The channel utilization factor is defined as in equation (11)

$SINR$ The Signal-to-Interference-plus-Noise-Ratio is defined as in equation (9) and calculated using the

$Neighbour\ Cha$ of equation (13) and the

$Neighbour\ RSSI$ of equation (15)

$B$ Bandwidth of the currently used channel combination (16)

According to an optional aspect of the invention, the performance determining unit is further adapted to:

- compare the backhaul Received Signal Strength Indicator to a first predefined threshold;
- compare the fronthaul Received Signal Strength Indicator to the first predefined threshold;
- compare the backhaul Received Signal Strength Indicator to a second predefined threshold;
- compare the fronthaul Received Signal Strength Indicator to the second predefined threshold;
- determine whether the backhaul Received Signal Strength Indicator is comprised between the first predefined threshold and the second predefined threshold;
- determine whether the fronthaul Received Signal Strength Indicator is comprised between the first predefined threshold and the second predefined threshold; and
- determine a backhaul throughput and a fronthaul throughput of the used channel combination using the backhaul channel utilization factor and the fronthaul channel utilization factor for the used channel combination.

For all the radios of the extender $j^*$, the optimality of the current position is checked from the RSSI values. In particular, the RSSI at both the backhaul and the fronthaul of the extender are compared against threshold values: a first predefined threshold $RSSI_1$ and a second predefined threshold $RSSI_2$.

| | | |
|---|---|---|
| Case 1 | $RSSI_b < RSSI_1$ | (17) |
| Case 2 | $RSSI_f < RSSI_1$ | (18) |
| Case 3 | $RSSI_b > RSSI_2$ | (19) |
| Case 4 | $RSSI_f > RSSI_2$ | (20) |
| Case 5 | $RSSI_1 < RSSI_b < RSSI_2$ | (21) |
| Case 6 | $RSSI_1 < RSSI_f < RSSI_2$ | (22) |

The throughput of the channels at the current position of the extender are determined using the utilization factors, $U_f$ and $U_b$ and SINR using one of the following functions:

$$T_f = (1 - U_f)\, B\, Log_2\, (1 + SINR_f) \qquad (23)$$

$$T_f = (1 - U_{f)}\, max\, (0, (SINR_f - SINR')/SINR_f) \qquad (24)$$

While the equation (23) represents the available resource on the channel as a function of the channel capacity (Shannon bound), the second formula ensures the throughput vanished if the achievable SINR on the channel is above a minimal threshold value $SINR_f$ to attain the desired transmission rate.

According to an optional aspect of the invention, the performance optimizing unit is further adapted to, when the backhaul Received Signal Strength Indicator is lower than the first predefined threshold or when the fronthaul Received Signal Strength Indicator is lower than the first predefined threshold, generate the updated position for the extender.

According to an optional aspect of the invention, when the backhaul Received Signal Strength Indicator is lower than the first predefined threshold, the updated position corresponds to an updated position at the middle between a position of the extender and a preceding position of a preceding extender preceding the extender towards the wireless access point.

According to an optional aspect of the invention, when the fronthaul Received Signal Strength Indicator is lower than the first predefined threshold, the updated position corresponds to an updated position at the middle between a position of the extender and a next position of a next extender following the extender towards the user device.

In the case of equation (17), the backhaul is suboptimal. It is necessary to move the extender closer to the preceding node or the access point. In the case of equation (18), the fronthaul is suboptimal. It is necessary to move the extender closer to the next node or the user device. If the cases of equations (17) or (18) happen, the performance optimizing unit generates an updated position for the extender from a position *i* to a *position j* where *position j* = (*position i* + *position k*)/2, where position *k* is the position of the preceding node in case of equation (17) and the position of the next node in case of equation (18), respectively. However, the updated channel combinations at the updated position have to be taken into account. As such, the neighbouring scan of node at the position *k* is used to determine what will be the achievable throughput at the updated position and for the updated channel combination.

According to an optional aspect of the invention, the performance optimizing unit is further adapted to, when the backhaul Received Signal Strength Indicator is larger than the second predefined threshold or when the fronthaul Received Signal Strength Indicator is larger than the second predefined threshold, generate the updated channel combination for the extender.

In the case of equation (19), the backhaul is optimal. The extender can be moved from the preceding node or the access point. In the case of equation (20), the fronthaul is optimal. The extender can be moved from the next node or the user device. If the cases of equations (19) or (20) happen, then the performance optimizing unit generates an updated channel combination such that the channel combination is optimized. The channel combination with highest values of fronthaul throughput and backhaul throughputs are selected. If both channels are overlapping or are the same, then only one channel is changed at a time. Specifically, the radio with the minimal value of throughput is tuned first and then the second radio is optimized after the configuration is applied.

According to an optional aspect of the invention, the performance optimizing unit is further adapted to, when the backhaul Received Signal Strength Indicator is comprised between the first predefined threshold and the second predefined threshold or when the fronthaul Received Signal Strength Indicator is comprised between the first predefined threshold and the second predefined threshold, generate the updated channel combination for the extender.

In the case of equation (21), the backhaul might be suboptimal. The extender can be moved after checking the updated channel combinations. In the case of equation (22), the fronthaul might be suboptimal. The extender can be moved after checking the updated channel combinations. If the cases of equations (21) or (22) happen, this is an indication that either the channel combination or the position of the extender are suboptimal. The performance optimizing unit then generates an updated channel combination first by trying channel combinations on both the backhaul and the fronthaul links. One way to select an updated channel combination is to sort the channel combinations based on the calculated value of throughput and iteratively apply them. If the Quality Of Experience of the user device remains below a predefined Quality Of Experience threshold, then the performance optimizing unit generates an updated position as it would do in the case of equations (17) or (18).

Alternatively, reinforcement learning approaches such as softmax can be applied in any of the above cases of equations (17) to (22) to achieve a balance between exploitation and exploration. The state in reinforcement learning refers to the location of the extender, and the set of actions in the channel combinations. The reward of each action can be calculated using the equation (23) or (24).

According to an optional aspect of the invention, when the Quality of Experience of the user device for the updated channel is lower than the predefined Quality of Experience threshold, the performance optimizing unit is further configured to generate an updated position for the extender.

According to an optional aspect of the invention, the updated channel combination comprises an updated fronthaul channel with maximum fronthaul throughput and an updated backhaul channel with maximum backhaul throughput.

This way, the throughput of the user device is the highest.

According to an optional aspect of the invention, when the Quality of Experience of the user device at the updated position and for the updated channel combination is lower than predefined Quality of Experience threshold, the performance optimizing unit is further adapted to generate a new updated position for the extender.

According to a second aspect of the invention, there is provided a method for optimizing Quality of Experience of a user device of a multi-radio multi-channel wireless network comprising a wireless access point and one or more extenders, the method comprising the steps of:

- mapping the extenders;
- selecting one of the extenders comprising a used channel combination and coupled via a used backhaul channel to the wireless access point and coupled via a used fronthaul channel to the user device;
- collecting network parameters for plural channels of the extenders;
- evaluating from the network parameters updated positions and updated channels for the one of the extender; and
- generating an updated position and/or an updated channel combination for the extender when one or more network parameters for the extender overstep one or more predefined thresholds.

The present invention addresses the channel selections for an access point and an extender of a multi-radio multi-channel wireless network while considering placement constraints. The end-to-end user performance is determined by optimizing both the positions and the channel configurations of all the extenders connecting the user equipment to the access point, based on collected user and channel information. This allows to autonomously search and select both optimal channel, jointly for the access point and the extender, and the position of the extender without the need of human domain knowledge or human intervention.

The performance optimizing unit according to the present invention considers candidate updated positions for the extender and candidate updated channel combinations for the extender using the network parameters collected by the performance determining unit for plural channels of the extenders. In other words, the performance optimizing unit identifies candidate positions and candidate combinations of updated fronthaul channels and updated backhaul channels from the network parameters and for which the performance optimizing unit determines from the network parameters that the Quality Of Experience of the user device at the candidate positions and for the candidate combinations would be larger than the Quality Of Experience of the user at the current position of the extender and for the current channel combination for the extender. In other words, the performance optimizing unit evaluates the Quality Of Experience of the user device for all the possible updated channel combinations of used fronthaul channels and used backhaul channels at all the possible updated positions of the extender. The performance optimizing unit further generates an updated position and/or an updated channel combination for the extender when one or more network parameters for the extender overstep one or more predefined thresholds.

The current invention in addition also relates to a computer program comprising software code adapted to perform the method according to the present invention.

The invention further relates to a computer readable storage medium comprising the computer program according to the present invention.

The invention further relates to a computer readable storage medium comprising computer-executable instructions which, when executed by a computing system, perform the method according to the present invention.

## Brief Description of the Drawings

Fig. 1 schematically illustrates a network model according to the present invention.

Fig. 2 schematically illustrates the limitations of the strategy of the current techniques of optimization of the channel and of the position of an extender in a multi-radio multi-channel wireless mesh network.

Fig. 3 schematically illustrates an embodiment of a system according to the present invention.

Fig. 4 schematically illustrates an embodiment of the steps of the method according to the present invention.

Fig. 5 schematically illustrates a suitable computing system for hosting the system of Fig. 3.

## Detailed Description of Embodiment(s)

According to an embodiment shown in Fig. 1, a semi-stationary multi-radio multi-channel wireless network 100 comprises one static master wireless access point 3, also referred to as access point, or mAP or AP, and a plurality of access points 4 with wireless backhaul referred to as extenders 4. The position of the master access point 3 is static.

In other words, the position of the access point 3 does not change over time. The positions of the extenders 4 can be changed over time. Each extender 4 comprises one or more backhaul channels and one or more fronthaul channels. A used channel combination 500 of an extender 4 comprises one of the backhaul channels, referred to as the used backhaul channel, and one of the fronthaul channels, referred to as the used fronthaul channel, wherein both the used backhaul channel and the user fronthaul channel are in use by the extender. The master access point 3 and each of the extenders 4 are equipped with $R$ radio interfaces, where each radio is assigned to one channel. The network is serving $U$ user devices 2 that are connected to the master access point 3 either directly, such as for example the node user device 2 with reference V6 on Fig. 1, or through one or more extenders 4, such as for example the node user device 2 with reference V8 on Fig. 1. The network is modelled as a bi-directional graph $G(V,E)$ wherein $V$ is the set of nodes and $E$ is the set of uni-directional links. Each node $v_i$ comprised in $V$ represents either the master access point 3, the extender 4 or the user device 2, where $v_0$ is the master access point 3, $v_1, ..., v_M$ are extenders 4, and $v_{M+1}, ...., v_{M+U}$ are user devices 2. The set of radio interfaces for each node $v_i$ comprised in $V$ is denoted by $R_{v_i}$, $C_{v_i}$ denotes set of channels selected to radio-interfaces of nodes $v_i$.

According to an embodiment shown in Fig. 2, a network comprises an access point, a single or multiple extenders and a user device. The link between the access point and an extender is called a backhaul link and the link between an extender and the user device is called a fronthaul link. An extender is located at position A indicated by reference 101 in Fig. 2, which corresponds to a mid-way approach recommended by most vendors such as for example Google, NetGear, etc.. At this position, the throughput at the backhaul 515, the throughput at the fronthaul 516 and the throughput at the user device is measured for different combinations of backhaul channels 505 and fronthaul channels 506. At position A 101, a very good fronthaul throughput 516 is measured on different channel combinations of backhaul channels 505 and fronthaul channels 506. However, at the same position A 101, a good backhaul throughput 515 on any combination of channels 505;506 is not measured. Consequently, the user throughput 517 being the minimum of both the backhaul throughput 515 and the fronthaul throughput 516, it can be concluded that channel selection alone is not sufficient to ensure a good Quality Of Experience to the user device. The extender is then repositioned at an updated position B indicated by reference 102 on Fig. 2m which is an optimal position for the extender according to the system according to the present invention. At this position B 102, the optimization of the position of the extender is not performed independently from the optimization of the channel combination of the extender. At this position B 102, the search towards an optimal position for the extender is combined with the search towards an optimal channel combination for the extender in order to improve the experience of the user device. As it can be seen on Fig. 2, at the position B 102, it is possible to achieve a compromise between backhaul channel 505 selection and fronthaul channel selection 506 and measure channels combinations that provide high user device throughputs 517.

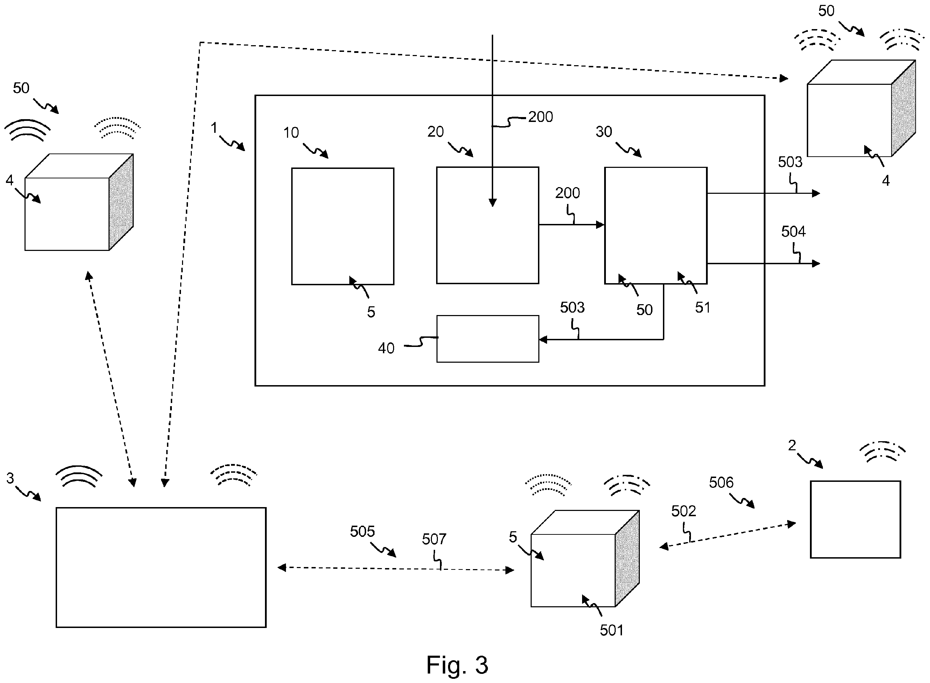

According to an embodiment shown in Fig. 3, a mutli-radio multi-channel wireless network, also referred to as network, comprises a wireless access point 3, a user device 2, one or more extenders 4 and a system 1 according to the present invention. The position of the wireless access point 4 is static, i.e. it cannot change in time. The positions of the one or more extenders 4 are semi-mobile, i.e. the positions of the extenders 4 can change in time when the system 1 according to the present invention generates updated positions 503 for one or more of the extenders 4. The user device 2 is coupled indirectly to the wireless access point 3 via the extender 5 via a used fronthaul channel 502 at the fronthaul 506 of the extender 5. The extender 5 is coupled directly to the wireless access point 3 via a used backhaul channel at the backhaul of the extender 5. The system 1 according to the present invention comprises a selecting unit 10, a performance determining unit 20 and a performance optimizing unit 30. The selecting unit 10 maps the extenders 4 of the network and calculates throughputs of plural links or hops between the wireless access point 3 and the user device 2. The throughputs are calculated from a total number of transmitted bytes over a total number of received bytes over a time interval. The selecting unit 10 selects the link for which the end-to-end throughput of the user device is the lowest, thereby selecting the extender 5. The performance determining unit 20 of the system 1 collects network parameters 200 for plural channels of the extenders 4 of the network. The performance optimizing unit 30 evaluates from the network parameters 200 updated positions 50 and updated channel combinations 51 for the extender 5. The updated positions 50 can be the positions of another extender 4 of the network. The performance optimizing unit 30 generates an updated position 503 and/or generates an updated channel combination 504, i.e. an updated backhaul channel and an updated fronthaul channel 502, for the extender 5 when one or more of the network parameters for the extender 5 overstep one or more predefined thresholds. The system 1 according to the present invention further comprises a controlling unit 40 which determines whether the Quality Of Experience of the user device 2 at the updated position 503 and/or for said updated channel combination 504 exceeds a predefined Quality Of Experience threshold.

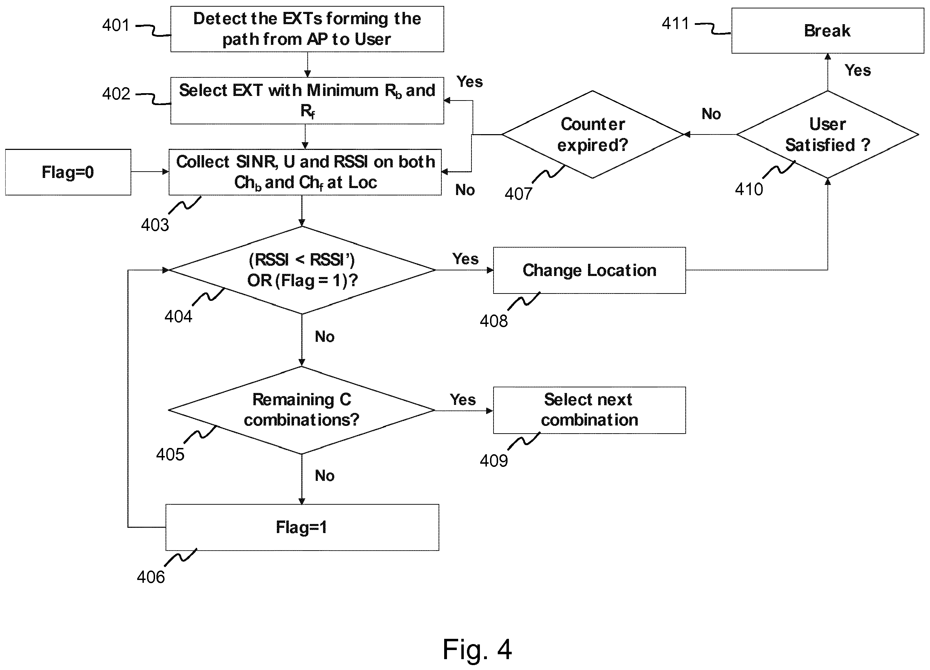

The steps of the method performed by a system according to the present invention described in Fig. 3 are depicted in Fig. 4. In step 401, the system maps the extenders forming a path between the wireless access point and the user device. Then in step 402 an extender along the path of nodes formed between the wireless access point and the user device is selected. This extender is comprised in the link for which the end-to-end throughput of the user device is the lowest. Network parameters are then collected by the system of Fig. 3 in step 403. The network parameters are then analysed by the system of Fig. 3 to evaluate from the network parameters updated positions and updated channel combinations for the extender. For example, the following network parameters are determined and considered by the system of Fig. 3:

- a RSSI ratio of a backhaul Received Signal Strength Indicator at backhaul of the extender over a fronthaul Received Signal Strength Indicator at fronthaul of the extender;
- updated Received Signal Strength Indicators for the updated channel combinations comprising ratios of backhaul Received Signal Strength Indicators at backhaul of the extenders over fronthaul Received Signal Strength Indicators at fronthaul of the extenders;
- a channel utilization ratio of a backhaul channel utilization factor over a fronthaul channel utilization factor for the used channel combination;
- updated channel utilization ratios for the updated channel combinations comprising ratios of backhaul channel utilization factors over fronthaul channel utilization factors for the updated channel combinations;
- a Signal to Interference plus Noise Ratio using the updated Received Signal Strength Indicators; and
- a bandwidth of the used channel combination.

In step 404, the network parameters are compared to a first predefined threshold and a second predefined threshold. When one or more of the network parameters overstep one or more of the predefined thresholds, the system of Fig. 3 generates an updated position for the extender in step 408. The system of Fig. 3 then checks in step 410 whether the Quality Of Experience of the user device of the network has improved. If this is the case, the method stops at step 411. If the Quality Of Experience at the updated position has not improved, the method goes back to selecting another extender of the network in step 402 when the maximum number of positions of the extender that could be tried has been reached - in order to minimize the burden on the user device - or to collecting network parameters in step 403. In the event in step 404 that one or more network parameters do not overstep one or more predefined thresholds, the system of Fig. 3 generates an updated channel combination in steps 405 and 409 for the extender. In case the user device remains unsatisfied with the updated channel combination, a flag is generated in step 406 of the method and the system of Fig. 3 goes back to step 404 to compare the network parameters to one or more predefined thresholds and to determine whether an updated position for the extender can be generated by the system of Fig. 3.

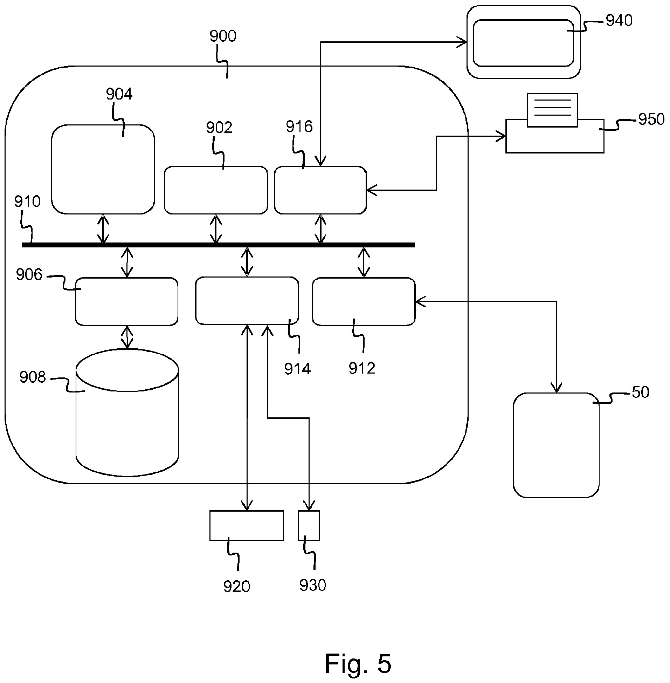

Fig. 5 shows a suitable computing system 900 for hosting the system 1 of Fig. 3. Computing system 900 may in general be formed as a suitable general purpose computer and comprise a bus 910, a processor 902, a local memory 904, one or more optional input interfaces 914, one or more optional output interfaces 916 a communication interface 912, a storage element interface 506 and one or more storage elements 908. Bus 910 may comprise one or more conductors that permit communication among the components of the computing system. Processor 902 may include any type of conventional processor or microprocessor that interprets and executes programming instructions. Local memory 904 may include a random access memory (RAM) or another type of dynamic storage device that stores information and instructions for execution by processor 902 and/or a read only memory (ROM) or another type of static storage device that stores static information and instructions for use by processor 904. Input interface 914 may comprise one or more conventional mechanisms that permit an operator to input information to the computing device 900, such as a keyboard 920, a mouse 930, a pen, voice recognition and/or biometric mechanisms, etc. Output interface 916 may comprise one or more conventional mechanisms that output information to the operator, such as a display 940, a printer 950, a speaker, etc. Communication interface 912 may comprise any transceiver-like mechanism such as for example two 1 Gb Ethernet interfaces that enables computing system 900 to communicate with other devices and/or systems, for example mechanisms for communicating with one or more other computing systems 50. The communication interface 912 of computing system 900 may be connected to such another computing system by means of a local area network (LAN) or a wide area network (WAN, such as for example the internet, in which case the other computing system 980 may for example comprise a suitable web server. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example 1TB SATA disk drives, and control the reading and writing of data to and/or from these storage elements 908. Although the storage elements 908 above is described as a local disk, in general any other suitable computer-readable media such as a removable magnetic disk, optical storage media such as a CD or DVD, -ROM disk, solid state drives, flash memory cards, ... could be used. The system 900 described above can also run as a Virtual Machine above the physical hardware.

The system 1 of Fig. 3 can be implemented as programming instructions stored in local memory 904 of the computing system 900 for execution by its processor 902. Alternatively system 1 of Fig. 3 could be stored on the storage element 908 or be accessible from another computing system 50 through the communication interface 912.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the ones described or illustrated above.

## Claims

1. A system (1) for optimizing Quality of Experience of a user device (2) of a multi-radio multi-channel wireless network (100) comprising a wireless access point (3) and one or more extenders (4), said system comprising:

   - a selecting unit (10), adapted to map said extenders (4) and to select one of said extenders (5) comprising a used channel combination (501) and coupled via a used backhaul channel (507) to said wireless access point (3) and coupled via a used fronthaul channel (502) to said user device (2);
   - a performance determining unit (20), adapted to collect network parameters (200) for plural channels of said extenders (4); and
   - a performance optimizing unit (30), configured to evaluate from said network parameters (200) updated positions (50) and updated channel combinations (51) for said one of said extender (5), and further configured to generate an updated position (503) and/or to generate an updated channel combination (504) for said extender (5) when one or more network parameters (200) for said extender (5) overstep one or more predefined thresholds.

2. A system (1) according to claim 1, wherein said system (1) further comprises a controlling unit (40), adapted to determine whether said Quality of Experience of said user device (2) at said updated position (503) and/or for said updated channel combination (504) exceeds a predefined Quality of Experience threshold.

3. A system (1) according to claim 1, wherein said selecting unit (10) is further adapted to:

   - calculate throughputs of plural links between said wireless access point (3) and said user device (2) from a total number of transmitted bytes over a total number of received bytes over a time interval; and
   - select said link for which said end-to-end throughput is the lowest, thereby selecting said extender (5).

4. A system (1) according to claim 1, wherein said performance determining unit (30) is further adapted to calculate from said network parameters (200):

   - a RSSI ratio of a backhaul Received Signal Strength Indicator at backhaul (505) of said extender (5) over a fronthaul Received Signal Strength Indicator at fronthaul (506) of said extender (5);
   - updated Received Signal Strength Indicators for said updated channel combinations (504) comprising ratios of backhaul Received Signal Strength Indicators at backhaul of said extenders (4) over fronthaul Received Signal Strength Indicators at fronthaul of said extenders (4);
   - a channel utilization ratio of a backhaul channel utilization factor over a fronthaul channel utilization factor for said used channel combination (501);
   - updated channel utilization ratios for said updated channel combinations (504) comprising ratios of backhaul channel utilization factors over fronthaul channel utilization factors for said updated channel combinations (504);
   - a Signal to Interference plus Noise Ratio using said updated Received Signal Strength Indicators; and
   - a bandwidth of said used channel combination (502).

5. A system (1) according to claim 4, wherein said performance determining unit (30) is further adapted to:

- compare said backhaul Received Signal Strength Indicator to a first predefined threshold;
- compare said fronthaul Received Signal Strength Indicator to said first predefined threshold;
- compare said backhaul Received Signal Strength Indicator to a second predefined threshold;
- compare said fronthaul Received Signal Strength Indicator to said second predefined threshold;
- determine whether said backhaul Received Signal Strength Indicator is comprised between said first predefined threshold and said second predefined threshold;
- determine whether said fronthaul Received Signal Strength Indicator is comprised between said first predefined threshold and said second predefined threshold; and
- determine a backhaul throughput and a fronthaul throughput of said used channel combination using said backhaul channel utilization factor and said fronthaul channel utilization factor for said used channel combination.

6. A system (1) according to claim 5, wherein said performance optimizing unit (30) is further adapted to, when said backhaul Received Signal Strength Indicator is lower than said first predefined threshold or when said fronthaul Received Signal Strength Indicator is lower than said first predefined threshold, generate said updated position (503) for said extender (5).

7. A system (1) according to claim 6, wherein, when said backhaul Received Signal Strength Indicator is lower than said first predefined threshold, said updated position (503) corresponds to an updated position at the middle between a position of said extender (5) and a preceding position of a preceding extender preceding said extender (5) towards said wireless access point (3).

8. A system (1) according to claim 6, wherein, when said fronthaul Received Signal Strength Indicator is lower than said first predefined threshold, said updated position corresponds to an updated position (503) at the middle between a position of said extender (5) and a next position of a next extender following said extender (5) towards said user device (2).

9. A system (1) according to claim 5, wherein said performance optimizing unit (30) is further adapted to, when said backhaul Received Signal Strength Indicator is larger than said second predefined threshold or when said fronthaul Received Signal Strength Indicator is larger than said second predefined threshold, generate said updated channel combination (504) for said extender (5).

10. A system (1) according to claim 5, wherein said performance optimizing unit (30) is further adapted to, when said backhaul Received Signal Strength Indicator is comprised between said first predefined threshold and said second predefined threshold or when said fronthaul Received Signal Strength Indicator is comprised between said first predefined threshold and said second predefined threshold, generate said updated channel combination (504) for said extender (5).

11. A system (1) according to claim 10, wherein when said Quality of Experience of said user device (2) for said updated channel is lower than said predefined Quality of Experience threshold, said performance optimizing unit (30) is further configured to generate an updated position (503) for said extender (5).

12. A system (1) according to claim 5, wherein said updated channel combination (504) comprises an updated fronthaul channel (505) with maximum fronthaul throughput and an updated backhaul channel (506) with maximum backhaul throughput.

13. A system (1) according to claim 1, wherein, when said Quality of Experience of said user device (2) at said updated position (503) and for said updated channel combination (504) is lower than predefined Quality of Experience threshold, said performance optimizing unit (30) is further adapted to generate a new updated position (530) for said extender (5).

14. A method for optimizing Quality of Experience of a user device (2) of a multi-radio multi-channel wireless network (100) comprising a wireless access point (3) and one or more extenders (4), said method comprising the steps of:

- mapping said extenders (4);
- selecting one of said extenders (5) comprising a used channel combination (501) and coupled via a used backhaul channel (507) to said wireless access point (3) and coupled via a used fronthaul channel (501) to said user device (2);
- collecting network parameters (200) for plural channels of said extenders (4);

- evaluating from said network parameters (200) updated positions (51) and updated channels (52) for said one of said extender (5); and
- generating an updated position (503) and/or an updated channel combination (504) for said extender (5) when one or more network parameters (200) for said extender (5) overstep one or more predefined thresholds.

**15.** A computer program comprising software code adapted to perform the method according to claim 14.

Fig. 1

Fig. 2

16

Fig. 3

EP 3 435 731 A1

EP 3 435 731 A1

401 — Detect the EXTs forming the path from AP to User

402 — Select EXT with Minimum $R_b$ and $R_f$

Flag=0

403 — Collect SINR, U and RSSI on both $Ch_b$ and $Ch_f$ at Loc

Yes

No

407 — Counter expired?

No

410 — User Satisfied ?

Yes

411 — Break

404 — (RSSI < RSSI') OR (Flag = 1)?

Yes

408 — Change Location

No

405 — Remaining C combinations?

Yes

409 — Select next combination

No

406 — Flag=1

Fig. 4

Fig. 5

Europäisches
Patentamt

European
Patent Office

Office européen
des brevets

# EUROPEAN SEARCH REPORT

Application Number

EP 17 18 3838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/093059 A1 (BAI WEI [CN] ET AL) 19 April 2012 (2012-04-19)<br>* paragraph [0003] *<br>* paragraphs [0034], [0035], [0037] *<br>* paragraph [0047] *<br>* paragraphs [0090], [0096] *<br>* paragraphs [0100], [0117] *<br>* paragraph [0134] *<br>* paragraphs [0142], [0146] *<br>* paragraph [0165] *<br>----- | 1-15 | INV.<br>H04W88/04<br>H04W88/08<br>H04W84/00 |
| Y | WO 2017/070635 A1 (PHLUIDO INC [US]) 27 April 2017 (2017-04-27)<br>* page 8, lines 28-32 *<br>* page 9, lines 28-33 *<br>* page 10, lines 1-3 *<br>* page 13, lines 22-33 *<br>* page 18, lines 1-14 *<br>* page 32, lines 14-21 *<br>* page 35, lines 8-15 *<br>* page 44, lines 12-26 *<br>----- | 1-15 | |
| A | US 2015/195757 A1 (TIETZ ROBERT [GB] ET AL) 9 July 2015 (2015-07-09)<br>* paragraphs [0076] - [0080] *<br>----- | 1-15 | **TECHNICAL FIELDS SEARCHED (IPC)**<br><br>H04W |
| A | US 2014/335859 A1 (HAHN GENEBECK [KR] ET AL) 13 November 2014 (2014-11-13)<br>* paragraphs [0076] - [0079] *<br>----- | 1-15 | |

The present search report has been drawn up for all claims

| Place of search | Date of completion of the search | Examiner |
|---|---|---|
| Munich | 10 October 2017 | Mele, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 3838

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2017

| Patent document cited in search report | Publication date | Patent family member(s) | | Publication date |
|---|---|---|---|---|
| US 2012093059 A1 | 19-04-2012 | AU | 2010265387 A1 | 09-02-2012 |
| | | CN | 101931961 A | 29-12-2010 |
| | | CN | 102301770 A | 28-12-2011 |
| | | EP | 2445245 A1 | 25-04-2012 |
| | | US | 2012093059 A1 | 19-04-2012 |
| | | WO | 2010149021 A1 | 29-12-2010 |
| WO 2017070635 A1 | 27-04-2017 | NONE | | |
| US 2015195757 A1 | 09-07-2015 | CN | 104509162 A | 08-04-2015 |
| | | EP | 2873272 A2 | 20-05-2015 |
| | | GB | 2503942 A | 15-01-2014 |
| | | JP | 5971502 B2 | 17-08-2016 |
| | | JP | 2015526915 A | 10-09-2015 |
| | | KR | 20150020684 A | 26-02-2015 |
| | | US | 2015195757 A1 | 09-07-2015 |
| | | WO | 2014010493 A2 | 16-01-2014 |
| US 2014335859 A1 | 13-11-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.B. M. ALIM AL ISLAM et al.** Channel Assignment Techniques for Multi-Radio Wireless Mesh Networks: A Survey. *IEEE Communications Surveys and Tutorials,* December 2015, vol. 18 (2), 988-1017